# EUROPÄISCHE PATENTANMELDUNG

(11) **EP 4 592 053 A1**
(43) Veröffentlichungstag der Anmeldung: **30.07.2025**
(21) Anmeldenummer: 24211199.5
(22) Anmeldetag: 06.11.2024
(51) Int. Cl.: B29C 48/505, B29C 48/25, B29C 48/40, B29C 48/54, B29C 48/55, B29C 48/57

(54) **EXTRUDERSCHNECKE UND VERFAHREN ZUM HERSTELLEN DERSELBEN**

(30) Priorität: 24.01.2024 DE 102024101964
(71) Anmelder: Extruder Experts GmbH & Co. KG, 52156 Monschau-Imgenbroich (DE)
(72) Erfinder: Zimmermann, Dirk, 52156 Monschau (DE)
(74) Vertreter: Bauer Wagner Pellengahr Sroka

(57) **Zusammenfassung**

Offenbart ist zunächst eine Extruderschnecke mit einem langgestreckten zylindrischen Zuganker (7), Schneckensegmenten (13), die radial vorstehende Funktionselemente zum Fördern, Mischen und/oder Kneten eines Extrudats und eine Durchgangsbohrung (14) in einer Längsrichtung (3) der Extruderschnecke aufweisen, mit der Durchgangsbohrung (14) auf den Zuganker (7) aufgeschoben und an einer Spitze des Zugankers (7) axial abgestützt sind, und einem Konterelement (19), das an einem der Spitze entgegengesetzten Ende (9) des Zugankers (7) die Schneckensegmente (13) gegen die Spitze verspannt. Offenbart ist weiter ein Verfahren zum Herstellen einer solchen Extruderschnecke. Um das Verspannen der Schneckenelemente zu vereinfachen wird vorgeschlagen, dass der Zuganker (7) gedehnt, dann zwischen die Schneckensegmente (13) und das Konterelement (19) ein Sperrelement (27) eingelegt und schließlich der Zuganker (7) derart entspannt wird, dass das Sperrelement (27) zwischen den Schneckensegmenten (13) und dem Konterelement (19) eingespannt ist.

## Beschreibung

Die Erfindung betrifft zunächst eine Extruderschnecke mit einem langgestreckten zylindrischen Zuganker, Schneckensegmenten, die radial vorstehende Funktionselemente zum Fördern, Mischen und/oder Kneten eines Extrudats und eine Durchgangsbohrung in einer Längsrichtung der Extruderschnecke aufweisen, mit der Durchgangsbohrung auf den Zuganker aufgeschoben und an einer Spitze des Zugankers axial abgestützt sind, und einem Konterelement, das an einem der Spitze entgegengesetzten Ende des Zugankers die Schneckensegmente gegen die Spitze verspannt. Die Erfindung betrifft weiter ein Verfahren zum Herstellen einer solchen Extruderschnecke.

Zum Verspannen der Schneckenelemente schlägt DE 10 2021 112 163 A1 vor, die vormontierte Extruderschnecke in einer Spannvorrichtung abzustützen, das Ende des Zugankers mit einer definierten Last gegen die Spitze aus den Schneckenelementen herauszuziehen, eine auf einem Feingewinde am Ende des Zugankers als Konterelement angebrachte Spannmutter handfest anzuziehen und den Zuganker dann wieder zu entlasten.

### Aufgabe

Der Erfindung liegt die Aufgabe zugrunde, das Verspannen der Schneckenelemente zu vereinfachen

### Lösung

Ausgehend von der bekannten Extruderschnecke wird nach der Erfindung vorgeschlagen, dass ein Sperrelement zwischen den Schneckensegmenten und dem Konterelement eingespannt ist. Das Sperrelement hält ohne Anziehen des Konterelements die Spannung des Zugankers aufrecht. Ein Verdrehen des Konterelements um die Längsrichtung an dem Zuganker ist zum Verspannen der Schneckensegmente einer erfindungsgemäßen Extruderschnecke nicht erforderlich. Außerdem bestimmt die Länge des Sperrelements unmittelbar die Spannung - auf Druck in den Schneckensegmenten und auf Zug in dem Zuganker - und Dehnung bzw. Stauchung der Elemente der Extruderschnecke. Eine Überlastung durch übermäßiges Anziehen des Konterelements ist so konstruktiv im Vergleich zu der bekannten Extruderschnecke ebenso leichter zu vermeiden wie eine zu geringe Spannung, die die Funktion der Extruderschnecke gefährden könnte.

Vorzugsweise umgibt das Sperrelement einer erfindungsgemäßen Extruderschnecke ringförmig den Zuganker. Die Ringform erlaubt eine über dem Umfang des Zugankers gleichmäßige Krafteinleitung von dem Konterelement in die Schneckenelemente. Das Sperrelement kann hierbei aus zwei oder mehr Teilringen bestehen, die erst durch Montage zwischen Konterelement und den Schneckenelementen das Sperrelement bilden.

Vorzugsweise ist am Ende des Zugankers einer erfindungsgemäßen Extruderschnecke auf ein Gewinde eine Spannmutter als Konterelement aufgeschraubt. Das Konterelement kann dann zum Ende der Vormontage leicht von Hand derart angezogen werden, dass die Schneckenelemente an der Spitze und aneinander und das Konterelement an dem letzten Schneckenelement anliegt. Das Gewinde kann insbesondere ein Feingewinde oder ein selbsthemmendes Trapezgewinde sein.

Da das Konterelement beim Verspannen der Schneckenelemente nicht wie in der aus DE 10 2021 112 163 A1 bekannten Extruderschnecke an dem Zuganker um die Längsrichtung frei rotierbar sein muss, kann die Spannvorrichtung unmittelbar an diesem ansetzen. Insbesondere kann die Spannvorrichtung an dem Gewinde ansetzen, wenn dieses das Konterelement in der Längsrichtung durchdringt.

Vorzugsweise weist eine erfindungsgemäße Extruderschnecke als letztes der Schneckensegmente am Ende des Zugankers ein Antriebssegment mit einer äußeren, zu einer Antriebsnabe eines Extruders passenden Passverzahnung auf. Derartige Antriebssegmente sind allgemein bekannt und bewährt.

Vorzugsweise weist auch das Konterelement einer erfindungsgemäßen Extruderschnecke die Passverzahnung auf. Ein Verdrehen des Konterelements um die Längsachse ist so alternativ oder zusätzlich zu einer Selbsthemmung des Gewindes wirksam vermieden.

Erfindungsgemäße Extruderschnecken kommen in einem Einzel-, Doppel- oder MehrExtruder gleich- oder gegenläufig zum Einsatz. Solche Extruder sind allgemein bekannt und bewährt.

Ausgehend von dem bekannten Verfahren wird nach der Erfindung vorgeschlagen, dass zum Verspannen der Schneckensegmente der Zuganker gegen die Spitze aus den Schneckenelementen herausgezogen, dann zwischen die Schneckensegmente und das Konterelement ein Sperrelement eingelegt und schließlich der Zuganker derart entspannt wird, dass das Sperrelement zwischen den Schneckensegmenten und dem Konterelementen eingespannt ist. Nach dem erfindungsgemäßen Verfahren wird eine erfindungsgemäße Extruderschnecke hergestellt. Das erfindungsgemäße Verfahren zeichnet sich also gleichermaßen durch deren vorstehend erläuterte Vorteile aus.

Vorzugsweise wird in einem erfindungsgemäßen Verfahren der Zuganker an dem Konterelement aus den Schneckenelementen herausgezogen. Der Zuganker wird so im Vergleich zu der aus DE 10 2021 112 163 A1 bekannten Extruderschnecke nicht durch ein Sackbohrung geschwächt.

Vorzugsweise wird auf den Zuganker im Rahmen eines erfindungsgemäßen Verfahrens zwischen den Schneckensegmenten jeweils ein zylindrisches Koppelstück aufgeschoben, dass die Schneckensegmente verdrehfest verbindet. Eine verdrehfeste Verbindung entsteht insbesondere, wenn die Schneckensegmente innen und die Koppelstücke außen einen um die Längsrichtung verdrehfesten Passquerschnitt aufweisen. Der Passquerschnitt kann eine Passverzahnung in der Längsrichtung außen auf den Koppelstücken und innen in der Durchgangsbohrung, insbesondere über die gesamte Länge der Durchgangsbohrung sein. Als Passverzahnung wird eine Längsverzahnung einer Zylinderfläche bezeichnet, wobei die Zahnflanken parallel zur Zylinderachse verlaufen und das Drehmoment zwischen Welle und Nabe übertragen. Genormte Passverzahnungen mit Evolventen-, Keil- und Kerbflanken sind besonders kostengünstig herzustellen.

Vorzugsweise weist in einem solchen erfindungsgemäßen Verfahren das Konterelement die Passverzahnung des Antriebssegments auf. Das Konterelement ist dann im Betrieb der Extruderschnecke durch die entsprechende Innenverzahnung des Antriebs mechanisch gesichert.

Vorzugsweise wird in einem solchen erfindungsgemäßen Verfahren der Zuganker hydraulisch gedehnt. Hydraulische Presszylinder stehen variantenreich und preisgünstig zur Verfügung.

### Ausführungsbeispiele

Die Erfindung wird nachfolgend anhand von Ausführungsbeispielen erläutert. Es zeigen
Fig. 1 einen erfindungsgemäßen Extruder und

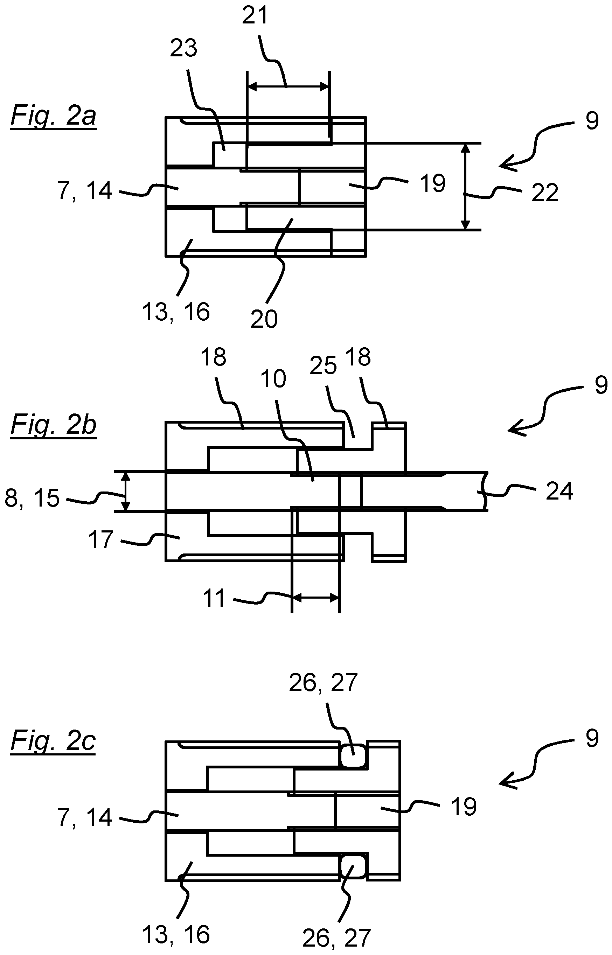

Fig. 2a-c drei Arbeitsschritte des erfindungsgemäßen Verfahrens.

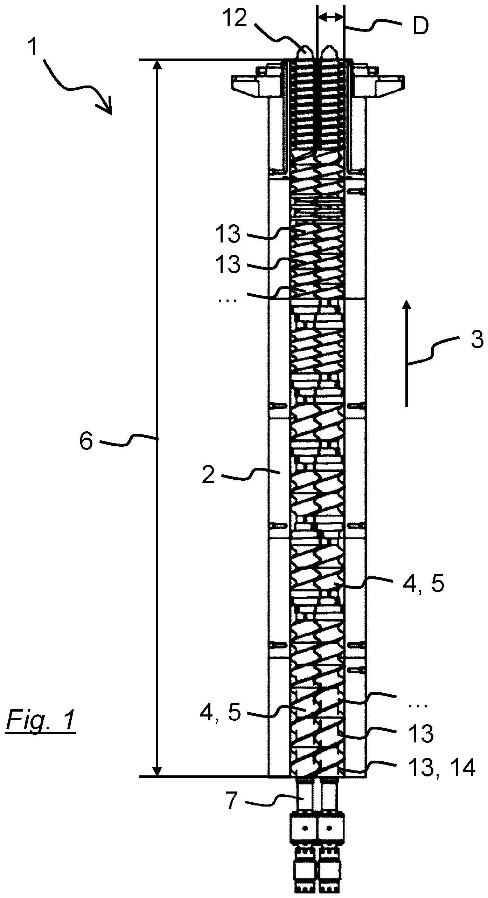

Der in Figur 1 gezeigte erfindungsgemäße Extruder 1 - hier: ein Doppelwellenextruder - weist ein Gehäuse 2 auf mit einem sich in einer Längsrichtung 3 erstreckenden Arbeitsraum 4, der einen Querschnitt in Form einer liegenden Acht aufweist und in dem zwei Extruderschnecken 5 mit einem Durchmesser D von 60 mm und einer Prozesslänge 6 von 240 cm, also 40 D gleichsinnig rotierbar gelagert sind.

Die erfindungsgemäßen Extruderschnecken 5 weisen zunächst einen Zuganker 7 auf. Der Zuganker 7 besteht aus einem Vergütungsstahl und weist einen Durchmesser 8 von 16,5 mm und am vorderen und hinteren Ende 9 jeweils ein Feingewinde 10 (M16 x 0,5) mit einer Länge 11 von 25 mm auf.

Zum Herstellen einer Extruderschnecke 5 wird zunächst auf das vordere Ende eine Spitze 12 geschraubt. Auf der Spitze 12 abgestützt werden ca. 40 Schneckensegmente 13 mit radial vorstehenden Funktionselementen zum Fördern, Mischen und/oder Kneten eines Extrudats in dem Extruder 1, und als letztes der Schneckensegmente 13 ein Antriebssegment 16 auf den Zuganker 7 aufgeschoben.

Die Schneckensegmente 13 weisen eine Durchgangsbohrung 14 mit einem Innendurchmesser 15 von 16,5 mm des Zugankers 8 auf mit einer Passverzahnung nach DIN 5480, die einen inneren Kopfkreisdurchmesser von 29,5 mm, einen äußeren Kopfkreisdurmesser von 32 mm und 24 Zähne mit Kerbflanken aufweist. Abwechselnd mit den Schneckensegmenten 13 werden zylindrische Koppelstücke mit der entsprechenden äußeren Passverzahnung aufgeschoben, die jeweils benachbarte Schneckensegmente 13 untereinander verdrehfest verbinden. Die Koppelstücke sind nicht im Detail dargestellt.

Ein nicht dargestellter anderer erfindungsgemäßer Extruder weist anstelle der aus DE 10 2021 112 163 A1 bekannten Koppelstücke eine längsverzahnte Hohlwelle als Zuganker auf. Derartige Hohlwellen sind allgemein bekannt.

Das Antriebssegment 16 weist an die (nicht dargestellten) Funktionselemente anschließend ein Rohr 17 und einer äußeren Passverzahnung 18 auf. Das Rohr 17 und der Zuganker 7 weisen eine Spielpassung auf.

Auf ein Feingewinde 10 am hinteren Ende 9 des Zugankers 7 wird als Konterelement 19 eine Spannmutter mit der äußeren Passverzahnung 18 des Antriebssegments 16 aufgeschraubt, die mit einem Stutzen 20 mit einer Länge 21 von 28 mm und einem Durchmesser 22 von 23 mm in einer axialen Bohrung 23 des Rohres 17 einliegt. Der Stutzen 20 und die Bohrung 23 weisen wiederum eine Spielpassung auf.

Die Vormontage abschließend wird eine nicht dargestellte Ausrichthülse mit der Passverzahnung 18 über das Konterelement 19 und das Antriebssegment 16 geschoben, die ein unbeabsichtigtes Verdrehen des Konterelements 19 gegen das Antriebssegment 16 verhindert.

Zum Spannen des Zugankers 7 werden die Schneckenelemente der Extruderschnecke 5 in einer Spannvorrichtung abgestützt, ein Zugstab 24 der Spannvorrichtung in das Feingewinde 10 des Konterelements 19 eingeschraubt und mittels eines hydraulischen Hohlkolbenzylinders mit einer Last von 40 kN aus der Extruderschnecke 5 herausgezogen. Über den Zugstab 24 hinaus ist die Spannvorrichtung nicht dargestellt.

In der gespannten Stellung wird die Ausrichthülse so weit auf das Antriebssegment 16 verschoben, dass sie den entstandenen Zwischenraum 25 zum Konterelement 19 freigibt. Dann werden zwei Halbringe 26 in den Zwischenraum 25 eingelegt, die zusammen ein den Zuganker 7 ringförmig umgebendes Sperrelement 27 bilden. Abschließend wird der Zuganker 7 entlastet und die Spannvorrichtung demontiert.

Bei einer Wartung der Extruderschnecke 5 nach einer vorgegeben Betriebsdauer kann die Spannung des Zugankers 7 in derselben Weise nachjustiert werden, bei Beschädigung oder Abnutzung im Betrieb kann die Extruderschnecke 5 leicht demontiert werden, um einzelne Schneckenelemente zu ersetzen.

### In den Figuren sind

- 1: Extruder
- 2: Gehäuse
- 3: Längsrichtung
- 4: Arbeitsraum
- 5: Extruderschnecke
- D: Durchmesser
- 6: Prozesslänge
- 7: Zuganker
- 8: Durchmesser des Zugankers
- 9: Ende
- 10: Gewinde
- 11: Länge des Gewindes
- 12: Spitze
- 13: Schneckensegment
- 14: Durchgangsbohrung
- 15: Innendurchmesser des Rohres
- 16: Antriebssegment
- 17: Rohr
- 18: Passverzahnung
- 19: Konterelement
- 20: Stutzen
- 21: Länge des Stutzens
- 22: Durchmesser des Stutzens
- 23: Bohrung
- 24: Zugstab
- 25: Zwischenraum
- 26: Halbring
- 27: Sperrelement

## Patentansprüche

1. Extruderschnecke (5) mit
a. einem langgestreckten zylindrischen Zuganker (7),
b. Schneckensegmenten (13), die radial vorstehende Funktionselemente zum Fördern, Mischen und/oder Kneten eines Extrudats und eine Durchgangsbohrung (14) in einer Längsrichtung (3) der Extruderschnecke (5) aufweisen, mit der Durchgangsbohrung (14) auf den Zuganker (7) aufgeschoben und an einer Spitze (12) des Zugankers (7) axial abgestützt sind, und
c. einem Konterelement (19), das an einem der Spitze (12) entgegengesetzten Ende (9) des Zugankers (7) die Schneckensegmente (13) gegen die Spitze (12) verspannt,
***gekennzeichnet durch*** ein Sperrelement (27), das zwischen den Schneckensegmenten (13) und dem Konterelement (19) eingespannt ist.

2. Extruderschnecke (5) nach dem vorgenannten Anspruch, ***dadurch gekennzeichnet, dass*** das Sperrelement (27) ringförmig den Zuganker (7) umgibt.

3. Extruderschnecke (5) nach einem der vorgenannten Ansprüche, ***gekennzeichnet durch*** ein Gewinde (10) am Ende (9) des Zugankers (7), auf das eine Spannmutter als Konterelement (19) aufgeschraubt ist.

4. Extruderschnecke (5) nach einem der vorgenannten Ansprüche, ***gekennzeichnet durch*** ein Antriebssegment (16) mit einer äußeren, zu einer Antriebsnabe eines Extruders (1) passenden Passverzahnung (18) als letztes der Schneckensegmente (13) am Ende (9) des Zugankers (7).

5. Extruderschnecke (5) nach dem vorgenannten Anspruch, ***dadurch gekennzeichnet, dass*** auch das Konterelement (19) die Passverzahnung (18) aufweist.

6. Extruder (1) mit einer oder mehreren Extruderschnecken (5) nach einem der vorgenannten Ansprüche.

7. Verfahren zum Herstellen einer Extruderschnecke (5), wobei Schneckensegmente (13) mit radial vorstehenden Funktionselementen zum Fördern, Mischen und/oder Kneten eines Extrudats und einer Durchgangsbohrung (14) in einer Längsrichtung (3) der Extruderschnecke (5)
a. mit der Durchgangsbohrung (14) nacheinander auf einen langgestreckten zylindrischen Zuganker (7) aufgeschoben,
b. an einer Spitze (12) des Zugankers (7) axial abgestützt und
c. an einem der Spitze (12) entgegengesetzten Ende (9) des Zugankers (7) mittels eines Konterelements (19) gegen die Spitze (12) verspannt
werden, ***dadurch gekennzeichnet, dass*** zum Verspannen der Schneckensegmente (13) der Zuganker (7) gegen die Spitze (12) aus den Schneckenelementen herausgezogen, dann zwischen die Schneckensegmente (13) und das Konterelement (19) ein Sperrelement (27) eingelegt und schließlich der Zuganker (7) derart entspannt wird, dass das Sperrelement (27) zwischen den Schneckensegmenten (13) und dem Konterelement (19) eingespannt ist.

8. Verfahren nach dem vorgenannten Anspruch, ***dadurch gekennzeichnet, dass*** der Zuganker (7) an dem Konterelement (19) aus den Schneckenelementen herausgezogen wird.
